# EUROPÄISCHE PATENTANMELDUNG

(11) **EP 0 927 691 A1**
(43) Veröffentlichungstag der Anmeldung: **07.07.1999**
(21) Anmeldenummer: 98111826.8
(22) Anmeldetag: 26.06.1998
(51) Int. Cl.: B65G 39/16

(54) **Gurtlenkstation**

(30) Priorität: 12.08.1997 DE 29714416 U
(71) Anmelder: TRANSNORM SYSTEM GmbH, 31177 Harsum (DE)
(72) Erfinder: Warnecke, Karl, 31079 Sibbesse (DE)
(74) Vertreter: Arendt, Helmut, Dipl.-Ing.

(57) **Zusammenfassung**

Die Erfindung betrifft eine Gurtlenkstation (10) für den Fördergurt (1) eines Bandförderers zur Verhinderung eines seitlichen Ablaufens des Gurtes von der vorgegebenen Bewegungsrichtung und Gegenlaufens gegen die Tragkonstruktion des Förderers. Zu diesem Zweck wird der Untertrum (1b) des Gurtes zwischen einem Paar Lenkrollen (12,13) geführt, welche um ihre Längsachsen (16,17) in einer Konsole (11,40,41) der Lenkstation drehbar gelagert sind. Die Konsole ist an einem eine senkrecht zur Gurtebene erstreckende Drehachse bildenden zylindrischen Element (15,49) drehbar befestigt und an der Lenkstation sind Fühlerrollen (18,19) drehbar befestigt, die sich in Laufrichtung des Untertrums vor den Lenkrollen und an beiden Seiten des unteren Gurttrums befinden.

## Beschreibung

Die Erfindung betrifft eine Lenkrollenvorrichtung für den Fördergurt eines Bandförderers zur Verhinderung eines seitlichen Ablaufens des Gurtes von der vorgegebenen Bewegungsrichtung und Gegenlaufens gegen die Tragkonstruktion des Förderers.

Bei Vorrichtungen zum Ein- und Ausschleusen von Fördergut unter einem spitzen Winkel in die Förderstrecke eines Bandförderers ist es bekannt, starre Umlenkstäbe zu verwenden. Die Reibung des Fördergurtes an den Umlenkstäben erzeugt Wärme, die teilweise ungleichmäßig auf die Gurttrums übertragen wird. Als Folge davon kann sich eine ungleichmäßige Spannung des Gurtes einstellen. Diese führt zu einem seitlichen Ablaufen des Gurtes bis zur Berührung mit dem tragenden Gestell der Vorrichtung. Um die Erwärmung der Umlenkstäbe gering zu halten, wird der Gurt bei der Montage nicht oder nur geringfügig gespannt. Durch das seitliche Gegenlaufen gegen das Traggestell wölbt sich der Gurt auf. Ferner ist zu berücksichtigen, daß das Gurtmaterial, insbesondere durch das darin befindliche Polyestergewebe, bei steigender Temperatur schrumpft. Daraus kann sich ein überproportionaler und ungleichmäßiger Anstieg der Gurtspannung bis zum totalen Ausfall der Fördervorrichtung ergeben.

Es ist bekannt, für Fördergurte, die eine Tendenz zum seitlichen Ablaufen zeigen, eine Lenkrolle einzusetzen, die dem seitlichen Ablaufen entgegenwirken soll. Die Lenkrolle wirkt nur auf eine Fläche des Untertrums. Es ist die Fläche, die nach dem Umlenken des Gurtes in den Obertrum das Fördergut trägt. Die Lenkrolle ist in der Ebene des Gurtes um wenige Grade schwenkbar. Mit einer Lenkrolle bekannter Ausführung sind mit Abstand in Laufrichtung des Gurtes vor der Lenkrolle Fühlerstäbe starr verbunden. Die Fühlerstäbe befinden sich an beiden Seiten des Gurtes. Beim Anlaufen einer Gurtkante an den ihr zugeordneten Fühlerstab wird durch den Anlaufdruck die Lenkrolle entsprechend geschwenkt. Die Rollbewegung der Lenkrolle schräg zur Gurtlaufrichtung führt zu Reaktionskräften. Diese haben eine quer zur Laufrichtung des Gurtes weisende Komponente, die zu einem Rückstellen des Gurtes führt.

Bekannt sind ferner Lenkrollen, die durch Fremdkraft betrieben werden. Sie können über berührungslose Abtastvorrichtungen, beispielsweise Lichtschranken oder kapazitive Sensoren, mit Hilfe pneumatischer oder elektromotorisch wirkender Vorrichtungen verstellt, d. h. geschwenkt werden.

Die bekannten Ausführungen sind jedoch nicht für Fördergurte geeignet, die fast keine Spannung aufweisen, beispielsweise bei einer eingangs erläuterten Vorrichtung zum Ein- und Ausschleusen gemäß EP 0 678 464 A1. Lose Gurte mit einer derartig geringen Spannung können nur sehr geringe Lenkrollenkräfte übertragen, die zum Rückstellen eines seitlich ablaufenden Gurtes nicht ausreichen. Es fehlt ferner eine ausreichende Quersteifigkeit, so daß auch aus diesem Grunde die Übertragung der seitlich gerichteten Rückstellkräfte erschwert wird. Ein Einsatz der bekannten Lenkrollenvorrichtungen für eine Vorrichtung mit sehr flexiblen Gurten ohne Spannung ist also nicht möglich. Die bekannten Lenkrollenvorrichtungen waren daher auf steife und gespannte Gurte für Förderbandeinrichtungen beschränkt, die zum Transport von Schüttgütern eingesetzt werden.

Aufgabe der Erfindung ist es, eine Lenkvorrichtung für Fördergurte zu schaffen, die in der Lage ist, nicht nur in steife und gespannte Gurte mit einer Tendenz zum seitlichen Ablaufen Rückstellkräfte einzuleiten, sondern Steuerungskräfte gegen seitliches Ablaufen wirksam auch auf nicht oder nur geringfügig gespannte und sehr flexible, querlabile Gurte zu übertragen. Die Erfindung löst diese Aufgabe durch eine Lenkstation mit folgenden Merkmalen:
a) der Untertrum des Gurtes wird zwischen einem Paar Lenkrollen geführt, welche um ihre Längsachsen drehbar in der Lenkstation angeordnet sind;
b) die Lenkstation ist mit den Lenkrollen um eine Drehachse, die sich senkrecht zur Gurtebene erstreckt, schwenkbar ausgebildet;
c) die Lenkrollen sind in einer Konsole der Lenkstation gelagert;
d) die Drehachse wird durch ein zylindrisches Element gebildet, an welchem die Konsole drehbar befestigt ist;
e) an der Lenkstation sind Fühlerrollen befestigt, die sich in Laufrichtung des Untertrums vor den Lenkrollen und an beiden Seiten des unteren Gurttrums befinden.

Bei sehr breiten Gurten oder bei größeren Andruckkräften ist es zur Erleichterung der Schwenkfähigkeit möglich, die Lenkrollen mehrteilig auszuführen. Die Radierwirkung wird dadurch erheblich verringert.
Der Kontakt der Gurtkanten mit den Fühlerrollen erzeugt eine geringe Rollreibung und schont die Gurtkanten. Das ist insbesondere bei dünnen, flexiblen oder querlabilen Gurten von Vorteil. Besonders vorteilhaft ist die Anwendung einer federnden, auf die Lenkrollen wirkenden Anpreßkraft.

Die Lenkstation mit den Erfindungsmerkmalen ist geeignet, nicht nur die in üblicher Weise gespannten, sondern dünne, flexible Gurte im ungespannten Zustand wirkungsvoll, ohne den Einsatz von Fremdkraft, d. h. selbsttätig zu steuern. Die Gurte werden dadurch am seitlichen Ablaufen von ihren Antriebs-, Trag- und Umlenkrollen gehindert. Mit einer federnden Anpreßkraft der Lenkrollen wird die Quersteifigkeit des Gurtes automatisch verbessert. Er erhält ständig den notwendigen Anpreßdruck in richtiger Größe. Eine Berücksichtigung der Gurtschlösser ist bei der Einrichtung nicht mehr notwendig. Die Anwendung federnder Anpreßkräfte ist insbesondere bei geringen Dicken von Vorteil, da gerade hier Gurtschlösser eine erhebliche Gurtstärkendifferenz bilden.

In der Zeichnung sind zwei Ausführungsbeispiele der Erfindung schematisch anhand einer Ein- und Ausschleusvorrichtung für Fördergut dargestellt und nachstehend erläutert. Es zeigen:
- Figur 1: eine Ein- und Ausschleusvorrichtung in schaubildlicher Darstellung mit einer Lenkstation,
- Figur 2: in schaubildlicher Darstellung die Ausbildung der Lenkstation mit unterteilten Lenkrollen,
- Figur 3: die Draufsicht auf eine Lenkstation mit Lenkrollen,
- Figur 4: eine Seitenansicht der Lenkstation gemäß Figur 3,
- Figur 5: einen Längsschnitt entlang der Gurtmittenlinie durch die Lenkstation gemäß Figur 3,
- Figur 6: eine Einzelheit der Figur 5,
- Figuren 7 bis 9: unterschiedliche Positionen der Lenkrollen zur Erläuterung eines Steuerungsbeispiels,
- Figur 10: eine Lenkvorrichtung mit federnden Anpreßelementen,
- Figur 11: die Draufsicht auf die Lenkvorrichtung gemäß Figur 10 und
- Figur 12: eine Seitenansicht der Vorrichtung gemäß Figuren 10 und 11.

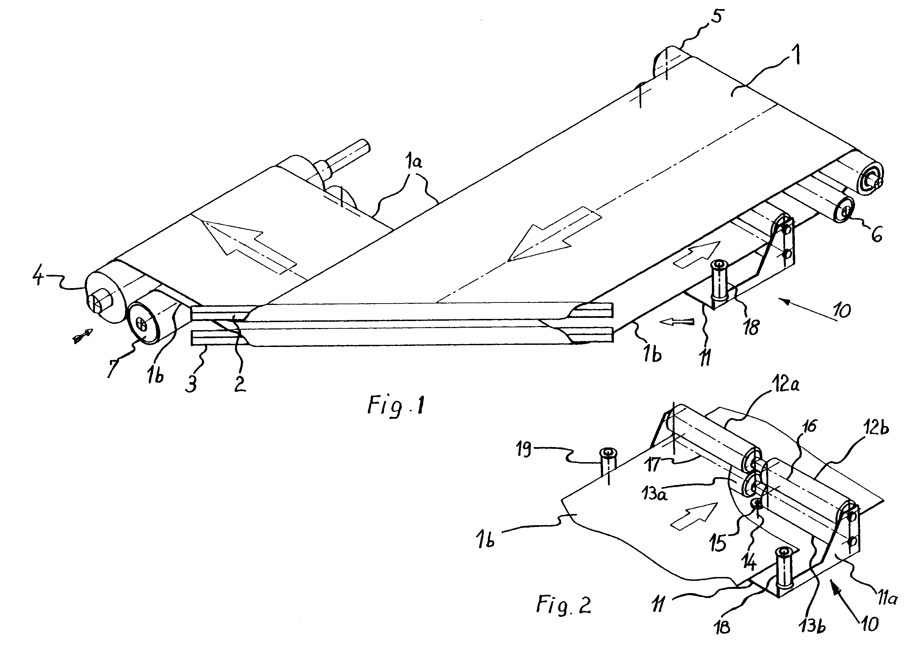

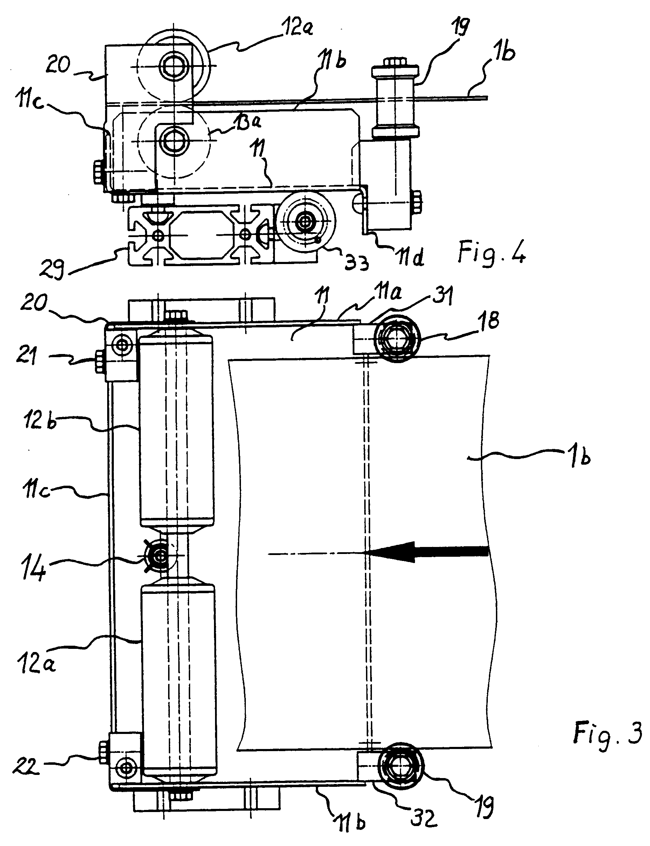

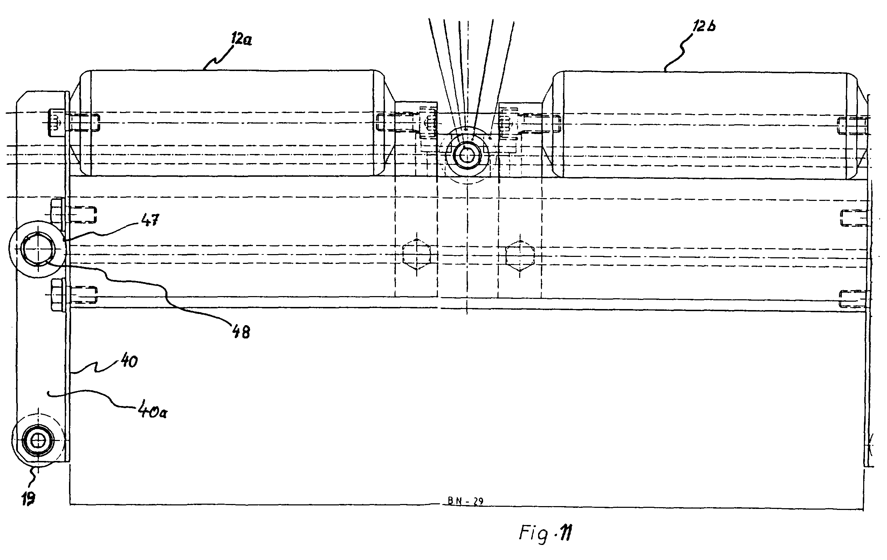

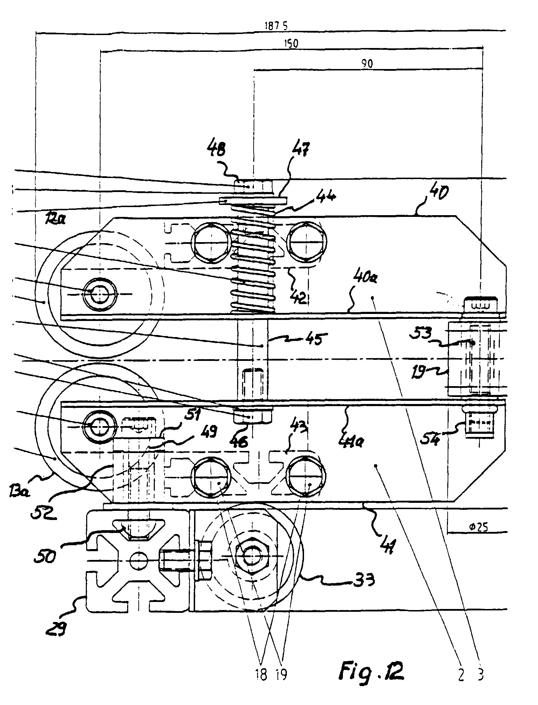

Während die Figuren 1 und 2 die Lenkstation an der Ein- und Ausschleuseinrichtung nur schematisch erkennen lassen, zeigen die Figuren 3 und 6 und 11 bis 13 einsatzfähige Ausführungen. In allen Figuren der Zeichnung sind gleiche Teile mit den gleichen Bezugsziffern versehen.

Die Lenkstation 10 besteht im wesentlichen aus einer Konsole 11 mit darin befestigten Rollenpaaren 12a, 12b; 13a, 13b. Zwischen den Rollenpaaren wird der Untertrum 1b des Gurtes 1 hindurchgeführt.
Die Konsole 11 der Lenkstation ist um die Drehachse 14 des Drehzapfens 15 schwenkbar.
Am vorderen Teil der Konsole, die sich in Laufrichtung des Untertrums 1b vor den Rotationsachsen der Lenkrollen befindet, sind Fühlerrollen 18 und 19 zu beiden Seiten des Gurttrums befestigt. Dieser kann mit seinen Kanten gegen die Fühlerrollen laufen. Sie sind drehbar und vermindern dadurch den Verschleiß durch geringe Rollreibung.

Die Konsole 11 ist mit zwei seitlichen Aufkantungen 11a, 11b und mit einer stirnseitigen Aufkantung 11c ausgeführt. An dem in Laufrichtung des Gurttrums 1b vor den Lenkrollen befindlichen Teil der Konsole ist diese mit einer Abkantung 11d versehen.
Die seitlichen Aufkantungen 11a und 11b dienen der unmittelbaren Befestigung der unteren Lenkrollen 13a und 13b. Das obere Rollenpaar 12a, 12b wird von einem Rollenhalter 20 getragen, welcher an der stirnseitigen Aufkantung 11c durch Schrauben 21 und 22 befestigt ist. Der Rollenhalter für das obere Rollenpaar trägt ferner an einer einwärts gebogenen Lasche 20a eine Nietmutter 23, in welche eine Höheneinstellschraube 24 greift. Mit dieser Höheneinstellschraube 24 kann der Rollenhalter 20 für das obere Rollenpaar 12a, 12b justiert werden.

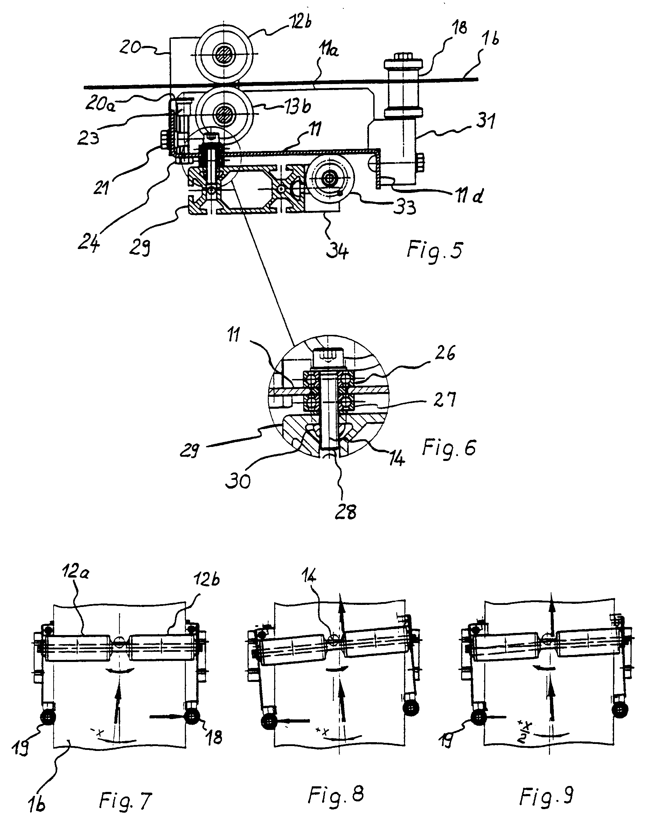

Die Konsole 11 ist beispielsweise, wie insbesondere die Figur 6 erkennen läßt, zwischen Kugelringen 26 und 27 eingespannt und über einen Drehzapfen in Form einer Zylinderschraube 28 mit einem Tragprofil 29 verbunden. Zur Befestigung greift die Zylinderschraube 28 in einen mit einem Innengewinde versehenen Nutenstein 30, der in eine Nut des Tragprofils eingeschoben ist. Die Konsole, und damit die gesamte Lenkstation, ist über die Kugelringe 26 und 27 um die Achse 14 drehbar.

Die vordere Abkantung 11d dient der Befestigung der Fühlerrollen 18 und 19 über Achshalter 31 und 32.

Zur Verringerung der Beanspruchung der Zylinderschraube 28 kann sich die Konsole 11 mit ihrem vorderen Teil auf einer Stützrolle 33 abstützen. Die Stützrolle 33 ist über einen Achshalter 34 am Tragprofil 29 befestigt.

Die Figur 7 läßt erkennen, daß der Gurt in der Bildebene eine nach rechts weisende Tendenz zum Ablaufen hat. Die rechte Gurtkante übt einen Druck auf die rechte Fühlerrolle 18 aus.
Dadurch weicht die Fühlerrolle nach rechts aus, so daß eine Schwenkbewegung entgegen dem Drehsinn des Uhrzeigers entsteht, wie die Figur 9 verdeutlicht. Mit der Schwenkbewegung entstehen durch die vom Gurt angetriebenen Lenkrollen Reaktionskräfte mit einer nach links gerichteten Komponente, wodurch sich der Gurt wieder nach links zurückorientiert, bis die linke Fühlerrolle 19 Kontakt mit der linken Gurtkante erhält und durch die rückstellende Kraft ein wenig nach links ausweicht, so daß die gesamte Lenkstation in Richtung der Bewegung des Uhrzeigers zurückschwenkt. Dadurch wird die zurückstellende Wirkung der Lenkrollen zwar vermindert, jedoch wird der Gurtlauf weiter nach links ausgerichtet. Sobald sich alle Kräfte im Gleichgewicht befinden, ist der Selbstjustiervorgang beendet.

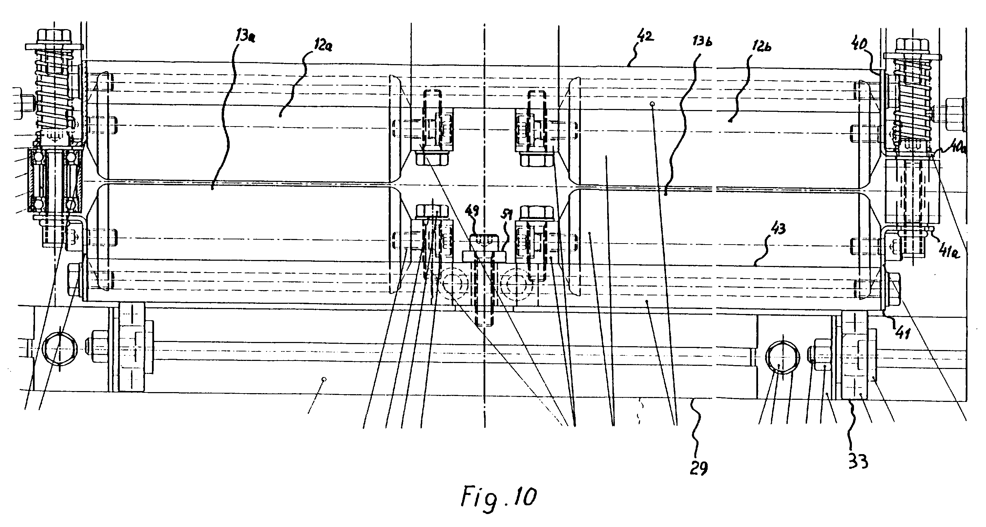

Bei der federnden Ausführungsform nach den Figuren 10 bis 12 sind die Lenkrollen 12a, 13a und 12b, 13b an getrennten Seitenteilen 40 und 41 befestigt. Für eine Verbindung der Seitenteile miteinander sind Querverbindungsprofile 42 und 43 vorgesehen. Diese Teile bilden zusammen die die Lenkrollen tragenden Konsolen.

Die Seitenteile 40 und 41 der Konsole sind an den einander zugewandten Enden rechtwinklig nach außen abgekantet, um Befestigungsleisten 40a und 41a zu bilden. Sie dienen der Anordnung von Schraubendruckfedern 44 zur Erzeugung einer federnden Belastung der Lenkrollen 12, so daß von beiden Seiten ein elastischer Druck auf den Untertrum des Fördergurtes ausgeübt wird. Die Schraubendruckfedern umfassen die Federführungen 45. Es sind zylindrische Stäbe, die durch die Seitenleisten 40a und 41a hindurchgreifen. Die unteren Enden sind mit Schrauben zur Bildung eines Federführungsanschlags 46 versehen. Die oberen Enden werden durch Druckscheiben 47 abgeschlossen und mit einer Schraube 48 gesichert.
Die Schraubendruckfedern 44 sind zwischen den Druckscheiben 47 und den Seitenleisten 40a der Seitenteile 40 eingespannt.

Die gesamte Konsole mit den Lenkrollen 12 und 13 ist um die Drehachse 49 in Gestalt einer Zylinderschraube schwenkbar. Die Drehachse greift in ihrem unteren Ende durch einen Nutenstein 50, mit dem sie in dem Tragprofil 29 befestigt ist. Sie führt dabei durch eine Drehbuchse 51, die in einem Distanzteil drehbar gelagert ist, auf welchem sie sich mit einem Bund gleitend abstützt.

Die Führungsrollen 18 und 19 an den den Lenkrollen gegenüberliegenden Enden der Seitenteile 40 und 41 sind um Drehachsen 53 in Form von Zylinderschrauben drehbar. Sie greifen mit ihren unteren Enden in Schraubansätze 54, die mit den Seitenleisten 40a und 41a fest verbunden sind.

## Patentansprüche

1. Lenkrollenvorrichtung für den Fördergurt eines Bandförderers zur Verhinderung eines seitlichen Ablaufens des Gurtes von der vorgegebenen Bewegungsrichtung und Gegenlaufens gegen die Tragkonstruktion des Förderers, dadurch gekennzeichnet, daß die Vorrichtung mit einer Lenkstation folgende Merkmale aufweist:
a) der Untertrum (1b) des Gurtes wird zwischen einem Paar Lenkrollen (12, 13) geführt, welche um ihre Längsachsen (16, 17) drehbar in der Lenkstation angeordnet sind;
b) die Lenkstation ist mit den Lenkrollen um eine Drehachse, die sich senkrecht zur Gurtebene erstreckt, schwenkbar ausgebildet;
c) die Lenkrollen sind in einer Konsole (11, 40, 41) der Lenkstation gelagert;
d) die Drehachse wird durch ein zylindrisches Element (15, 49) gebildet, an welchem die Konsole befestigt ist;
e) an der Lenkstation sind Fühlerrollen (18, 19) drehbar befestigt, die sich in Laufrichtung des Untertrums vor den Lenkrollen und an beiden Seiten des unteren Gurttrums befinden.

2. Vorrichtung nach Anspruch 1, dadurch gekennzeichnet, daß die Lenkrollen in mehrere Abschnitte (12a, 12b; 13a, 13b) unterteilt sind.

3. Vorrichtung nach Anspruch 1, dadurch gekennzeichnet, daß die Konsole der Lenkstation zwischen Kugelringen (26, 27) drehbar gelagert sind.

4. Vorrichtung nach einem der vorhergehenden Ansprüche, dadurch gekennzeichnet, daß die Konsole aus einem einteiligen Blech (11) mit auf- und abgekanteten Stirn- und Seitenteilen (11a, 11b; 11c, 11d) besteht, an welchen die Lenk- und Fühlerrollen befestigt sind.

5. Vorrichtung nach einem der vorhergehenden Ansprüche, dadurch gekennzeichnet, daß das zylindrische Element eine Zylinderschraube (28) ist, die über einen Nutenstein (30) an einem Trägerprofil (29) der Vorrichtung befestigt ist.

6. Vorrichtung nach einem der vorhergehenden Anprüche, dadurch gekennzeichnet, daß Federelemente zum elastischen Andrücken der Lenkrollen an den Fördergurt vorgesehen sind.

7. Vorrichtung nach Anspruch 6, dadurch gekennzeichnet, daß die Lenkrollen paarweise von Druckfedern gegeneinander gedrückt werden.

8. Vorrichtung nach einem der Ansprüche 6 oder 7, dadurch gekennzeichnet, daß die Lenkrollen in einer geteilten Konsole gelagert sind, deren tragende Teile sich ober- und unterhalb der Gurtebene erstrecken und unter der Belastung gegeneinander gerichteter Federkräfte stehen.

9. Vorrichtung nach Anspruch 8, dadurch gekennzeichnet, daß die die Lenkrollen tragenden Seitenteile der Konsole mit Flanschleisten (40, 41) zur Befestigung von Schraubendruckfedern (44) versehen sind.

10. Vorrichtung nach einem der Ansprüche 6 bis 9, dadurch gekennzeichnet, daß bei Verwendung mehrteiliger Lenkrollen die diese tragenden Konsolenteile durch Quertraversen (42, 43) miteinander verbunden sind.

11. Vorrichtung nach einem der Ansprüche 1, 2 und 4 bis 10, dadurch gekennzeichnet, daß die die Drehachse bildende Zylinderschraube (49) durch eine Drehbuchse (51) geführt und diese drehbar in einem mit einem Trägerprofil (29) verschraubten Distanzteil (52) gelagert ist.
